(19) Europäisches Patentamt
European Patent Office
Office européen des brevets

(11) **EP 3 228 838 A1**

(12) **EUROPÄISCHE PATENTANMELDUNG**

(43) Veröffentlichungstag:
**11.10.2017 Patentblatt 2017/41**

(51) Int Cl.:
*F01D 25/24* (2006.01)   *B22F 5/00* (2006.01)
*B22F 7/06* (2006.01)   *B22F 7/08* (2006.01)
*B33Y 10/00* (2015.01)   *B33Y 80/00* (2015.01)
*B22F 3/105* (2006.01)

(21) Anmeldenummer: **17152088.5**

(22) Anmeldetag: **19.01.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **22.03.2016   DE 102016204660**

(71) Anmelder: **MTU Aero Engines AG
80995 München (DE)**

(72) Erfinder: **Richter, Karl-Hermann
85229 Markt Indersdorf (DE)**

(54) **VERFAHREN ZUM HERSTELLEN EINES GEHÄUSES EINER STRÖMUNGSMASCHINE UND GEHÄUSE EINER STRÖMUNGSMASCHINE**

(57)     Die Erfindung betrifft ein Verfahren zum Herstellen eines Gehäuses einer Strömungsmaschine, insbesondere einer Gasturbine. Das Verfahren umfasst zumindest die Schritte Bereitstellen eines Gehäuserohteils (10), Herstellen eines Gehäuseelements (14), Erzeugen einer mit dem Gehäuseelement (14) korrespondierenden Montageöffnung (12) im Gehäuserohteil (10), Anordnen des Gehäuseelements (14) in der Montageöffnung (12) und Fügen des Gehäuseelements (14) mit dem Gehäuserohteil (10) mittels eines Schweißverfahrens. Die Erfindung betrifft weiterhin ein Gehäuse einer Strömungsmaschine.

Fig.3

EP 3 228 838 A1

**Beschreibung**

Die Erfindung betrifft ein Verfahren zum Herstellen eines Gehäuses einer Strömungsmaschine sowie ein Gehäuse einer Strömungsmaschine.

Gehäuse von Strömungsmaschinen, beispielsweise Triebwerksgehäuse von Flugtriebwerken, werden üblicherweise mit verschiedenen Gehäuseelementen versehen. Beispiele für solche Gehäuseelemente sind Bosse, Flansche für Durchführungen und Boroskope, Rails, lokale Aufdickungen und Verstrebungen, um die Festigkeitseigenschaften des Gehäuses lokal zu verbessern. Diese Gehäuseelemente werden durch Zerspanen eines Gehäuserohteils hergestellt.

Als nachteilig an zerspanender Fertigung ist der Umstand anzusehen, dass vergleichsweise große Aufmaße benötigt werden und ein entsprechend hoher Zerspanungsaufwand notwendig ist.

Aufgabe der vorliegenden Erfindung ist es, ein Verfahren anzugeben, welches eine schnellere und kostengünstigere Herstellung eines Gehäuses einer Strömungsmaschine ermöglicht. Eine weitere Aufgabe der Erfindung ist es, ein entsprechend schneller und kostengünstiger herstellbares Gehäuse anzugeben.

Die Aufgaben werden erfindungsgemäß durch ein Verfahren mit den Merkmalen des Patentanspruchs 1 sowie durch ein Gehäuse mit den Merkmalen des Patentanspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen des Gehäuses und umgekehrt anzusehen sind.

Ein erster Aspekt der Erfindung betrifft ein Verfahren zum Herstellen eines Gehäuses einer Strömungsmaschine, insbesondere einer Gasturbine. Erfindungsgemäß werden dabei zumindest die Schritte Bereitstellen eines Gehäuserohteils, Herstellen eines Gehäuseelements, Erzeugen einer mit dem Gehäuseelement korrespondierenden Montageöffnung im Gehäuserohteil, Anordnen des Gehäuseelements in der Montageöffnung und Fügen des Gehäuseelements mit dem Gehäuserohteil mittels eines Schweißverfahrens durchgeführt. Damit ist es im Unterschied zum Stand der Technik nicht länger erforderlich, das Gehäuserohteil mit einem großen Aufmaß herzustellen und aufwändig durch Zerspanen zu bearbeiten. Dies ermöglicht erhebliche Kosten- und Zeiteinsparungen sowie eine Minimierung der Rohteilkosten. Zusätzlich ist es möglich, das oder die Gehäuseelemente unabhängig von den Fertigungsfolgen am Gehäuserohteil herzustellen. In einfachster Ausgestaltung der Erfindung benötigt das derart hergestellte Gehäuse keine weiteren mechanischen Nachbehandlungsschritte mehr, sondern höchstens eine Wärmebehandlung. Insbesondere sind üblicherweise keine Trennschritte wie Spanen oder dergleichen mehr erforderlich. Das Gehäuseelement kann grundsätzlich ohne oder mit einem Schweißzusatz mit dem Gehäuserohteil verschweißt werden. Die Verwendung eines Schweißzusatzes erlaubt generell größere Toleranzen.

In einer vorteilhaften Ausgestaltung der Erfindung ist vorgesehen, dass ein Gehäuserohteil mit einer zumindest im Wesentlichen rotationssymmetrischen, insbesondere zylindrischen oder konischen Geometrie bereitgestellt wird. Wie hier durchwegs verwendet, bedeutet der Ausdruck "im Wesentlichen rotationssymmetrisch" allgemein die Gestalt eines rotationssymmetrisch um eine Rotationsachse ausgebildeten Körpers, wobei die Rotationsachse vorzugsweise koaxial mit einer Drehachse eines Rotors einer zugeordneten Strömungsmaschine angeordnet ist. Dementsprechend bedeutet "im Wesentlichen zylindrisch" allgemein die Gestalt eines Zylinders aufweisend, entweder mit oder ohne eine bestimmte Kontur. Analog bedeutet "im Wesentlichen konisch" allgemein die Gestalt eines Konus oder Kegels aufweisend, entweder mit oder ohne eine bestimmte Kontur. Dabei kann es auch vorgesehen sein, dass das Gehäuserohteil mehrere Abschnitte aufweist, die jeweils zumindest im Wesentlichen zylindrisch oder konisch ausgebildet sind. Das Gehäuserohteil ist innen üblicherweise hohl.

Weitere Vorteile ergeben sich, indem das Gehäuseelement mittels wenigstens eines Verfahrens aus der Gruppe Zerspanen, elektrochemisches Abtragen (ECM) und additive Fertigungsverfahren, insbesondere Laserstrahlschmelzen und/oder Elektronenstrahlschmelzen, hergestellt wird. Hierdurch kann das wenigstens eine Gehäuseelement in Abhängigkeit seiner jeweiligen Geometrie und Funktionalität besonders schnell und wirtschaftlich hergestellt werden.

Weitere Vorteile ergeben sich, wenn das Gehäuseelement auf und/oder mit einer in der Montageöffnung anzuordnenden Plattform hergestellt wird, wobei die Plattform vorzugsweise eine mit einer Wandstärke des Gehäuserohteils korrespondierende Wandstärke besitzt. Hierdurch kann das Gehäuseelement besonders schnell, einfach und präzise mit dem Gehäuserohteil gefügt werden, da die Plattform bereits die zur Montageöffnung passende Geometrie und vorzugsweise auch eine korrespondierende Wandstärke wie das Gehäuserohteil aufweist. Darüber hinaus ist es möglich, unterschiedliche Gehäuseelemente auf und/oder mit standardisierten oder individuell angepassten Plattform-Typen herzustellen. Dies erlaubt es, entsprechend standardisierte Montageöffnungen in das Gehäuserohteil einzubringen, wobei die Montageöffnungen beispielsweise an eine bestimmte Gehäuseelement-Funktionalität angepasst sein können, um eine vertauschsichere Montage zu gewährleisten.

In einer weiteren vorteilhaften Ausgestaltung der Erfindung wird eine Montageöffnung mit einer zumindest im Wesentlichen kreisförmigen oder ovalen oder mehreckigen, insbesondere rechteckigen Geometrie im Gehäuserohteil erzeugt. Mit anderen Worten ist es vorgesehen, dass eine oder mehrere Montageöffnungen mit einer möglichst einfachen Geometrie erzeugt werden.

Dies ermöglicht ebenfalls erhebliche Zeit- und Kostenvorteile sowohl bei der Erzeugung der Montageöffnung(en) als auch bei der Anordnung und Festlegung des oder der Gehäuseelemente. Darüber hinaus wird eine unnötige Schwächung des Gehäuserohteils vermieden. Im Fall einer eckigen Geometrie kann es grundsätzlich vorgesehen sein, dass eine, mehrere oder alle Ecken ausgerundet sind oder werden.

In einer weiteren vorteilhaften Ausgestaltung der Erfindung wird das Gehäuseelement beim Anordnen mittels wenigstens eines Zentrierelements relativ zur Montageöffnung ausgerichtet. Dies stellt eine prozesssichere Anordnung (failproof design) des Gehäuseelements sicher. Das Zentrierelement kann beispielsweise eine Zentrierlippe sein, die am Gehäuseelement und/oder der Monatgeöffnung ausgebildet ist und beim Anordnung des Gehäuseelements mit einer korrespondierenden Nut, Ausnehmung, Einkerbung oder dergleichen zusammenwirkt, so dass das Gehäuseelement nur in der korrekten räumlichen Ausrichtung in die Montageöffnung eingesetzt werden kann.

In einer weiteren vorteilhaften Ausgestaltung der Erfindung ist vorgesehen, dass die Montageöffnung mittels wenigstens eines Trennverfahrens, insbesondere aus der Gruppe Erodieren, Fräsen und Laserstrahlschneiden, erzeugt wird. Dies erlaubt es, die Monatgeöffnung(en) schnell, präzise und bedarfsgerecht in das Gehäuserohteil einzubringen.

Weitere Vorteile ergeben sich, indem das Gehäuserohteil vor dem Anordnen des Gehäuseelements in der Montageöffnung erwärmt und das Gehäuseelement anschließend in die Montageöffnung eingeschrumpft wird. Hierdurch wird eine kraftschlüssige Verbindung erzeugt, wodurch das Gehäuseelement besonders einfach gefügt und besonders hohen mechanischen und thermischen Belastungen widerstehen kann.

Eine besonders schnelle und präzise Anbindung des Gehäuseelements mit minimalem Wärmeeintrag in das Gehäuserohteil wird in weiterer Ausgestaltung der Erfindung dadurch erreicht, dass das Gehäuseelement mittels wenigstens eines Schweißverfahrens aus der Gruppe Elektronenstrahlschweißen und Laserstrahlschweißen am Gehäuserohteil festgelegt wird.

Um das Gehäuse optimal an seinen jeweiligen Einsatzzweck anpassen zu können, hat es sich in weiterer Ausgestaltung der Erfindung als vorteilhaft erwiesen, wenn das Gehäuseelement mit wenigstens einem Bauelement aus der Gruppe Flansch, Rail, Bosse, lokale Aufdickung, Ansatz, Durchführung und/oder Verstrebung hergestellt wird.

In einer weiteren vorteilhaften Ausgestaltung der Erfindung ist es vorgesehen, dass das Gehäuserohteil thermisch gedehnt wird, wonach wenigstens eine Rail im Gehäuserohteil angeordnet und eingeschrumpft wird und/oder dass ein Flansch thermisch gedehnt wird, wonach der Flansch am Gehäuserohteil angeordnet und auf das Gehäuserohteil aufgeschrumpft wird. Hierdurch können sowohl Rails (innere Flansche) als auch äußere Flansche kraftschlüssig mit dem Gehäuserohteil verbunden werden, wodurch sie mechanisch und thermisch besonders stark belastbar sind.

In einer weiteren vorteilhaften Ausgestaltung der Erfindung wird am Gehäuserohteil wenigstens ein Anschlag hergestellt, mittels welchem die Rail und/oder der Flansch relativ zum Gehäuserohteil ausgerichtet werden. Dies erlaubt eine besonders präzise und prozesssichere Ausrichtung der Rail und/oder des Flansches am Gehäuserohteil.

In einer weiteren Ausgestaltung der Erfindung ist vorgesehen, dass der Anschlag mittels eines Trennverfahrens, insbesondere durch Fräsen, hergestellt und/oder durch ein Fügeverfahren, insbesondere durch Schweißen und/oder Kleben, mit dem Gehäuserohteil verbunden wird. Dies erlaubt es, den Anschlag optimal in Abhängigkeit der jeweiligen konstruktiven Gegebenheiten auszubilden bzw. zu befestigen. Im Fall eines Trennverfahrens ist dabei ein entsprechendes Aufmaß des Gehäuserohteils erforderlich, so dass der Anschlag beispielsweise umlaufend oder lokal frästechnisch hergestellt werden kann. Ebenso ist es möglich, lokale Anschlag- oder Absatzelemente fügetechnisch mit dem Gehäuserohteil zu verbinden. Als Fügeverfahren sind insbesondere stoffschlüssige Verfahren wie Punktschweißen, Kleben, etc. vorteilhaft.

Eine besonders betriebssichere Verbindung wird in weiterer Ausgestaltung der Erfindung dadurch erreicht, dass die Rail und/oder der Flansch mit dem Gehäuserohteil verschweißt wird, insbesondere mittels einer umlaufenden Schweißnaht und/oder einer Kehlnaht und/oder eines I-Stoßes und/oder einer I-Naht.

Ein zweiter Aspekt der Erfindung betrifft ein Gehäuse einer Strömungsmaschine, insbesondere einer Gasturbine, wobei das Gehäuse schneller und kostengünstiger herstellbar ist, indem es ein Gehäuserohteil umfasst, an welchem ein Gehäuseelement in einer korrespondierenden Montageöffnung im Gehäuserohteil festgelegt und mit dem Gehäuserohteil verschweißt ist. Im Unterschied zum Stand der Technik ist es also vorgesehen, dass das Gehäuseelement nicht unmittelbar aus dem Gehäuserohteil erzeugt wird, sondern zunächst getrennt vom Gehäuserohteil hergestellt und danach in einer im Gehäuserohteil erzeugten Montageöffnung angeordnet und durch Schweißen mit dem Gehäuserohteil verbunden wird. Dies ermöglicht erhebliche Kosten- und Zeiteinsparungen sowie eine Minimierung der Rohteilkosten, da das oder die Gehäuseelemente unabhängig von den Fertigungsfolgen am Gehäuserohteil hergestellt werden können. In einfachster Ausgestaltung der Erfindung benötigt das derart hergestellte Gehäuse keine weiteren mechanischen Nachbehandlungsschritte mehr, sondern höchstens eine Wärmebehandlung. Insbesondere sind üblicherweise keine Trennschritte wie Spanen oder dergleichen mehr erforderlich. Vorzugsweise ist das Gehäuse mittels eines Verfahrens gemäß dem ersten Erfindungsaspekt erhältlich und/oder erhalten, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:

Fig. 1    eine schematische Perspektivansicht eines Gehäuserohteils mit einer Montageöffnung;

Fig. 2    eine schematische Perspektivansicht eines Gehäuseelements;

Fig. 3    eine schematische Perspektivansicht des Gehäuserohteils, bei welchem das Gehäuseelement in der Montageöffnung angeordnet und mit dem Gehäuserohteil verschweißt ist;

Fig. 4    eine schematische seitliche Schnittansicht eines Bereichs des Gehäuserohteils, in welchem eine Rail mit dem Gehäuserohteil verschweißt ist;

Fig. 5    eine schematische seitliche Schnittansicht eines Bereichs des Gehäuserohteils, in welchem eine Rail auf alternative Weise mit dem Gehäuserohteil verschweißt ist;

Fig. 6    eine schematische seitliche Schnittansicht eines Bereichs des Gehäuserohteils, an welchem ein Flansch mit dem Gehäuserohteil verschweißt ist; und

Fig. 7    eine schematische seitliche Schnittansicht eines Bereichs des Gehäuserohteils, an welchem ein alternativer Flansch angeordnet und mit dem Gehäuserohteil verschweißt ist.

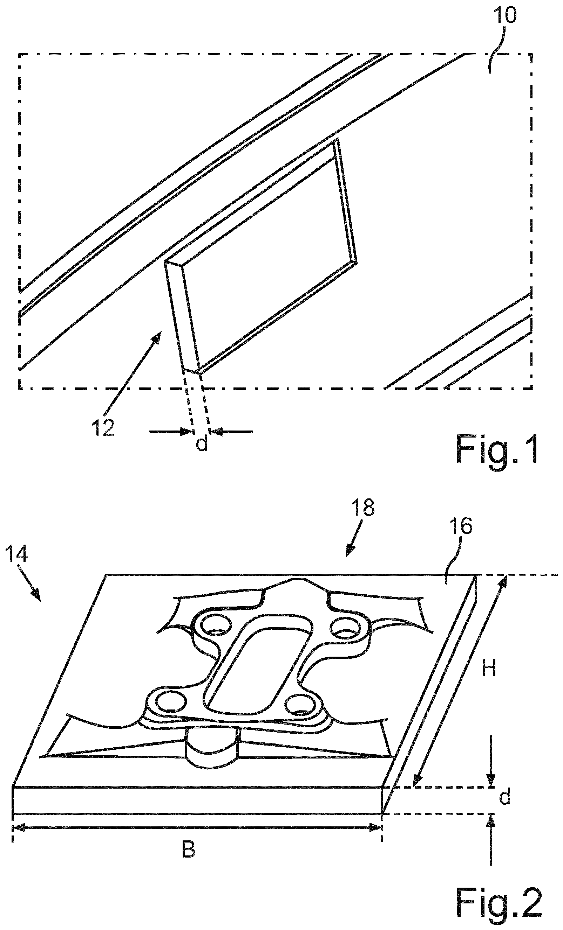

Fig. 1 zeigt eine schematische Perspektivansicht eines Gehäuserohteils 10 einer Gasturbine. Man erkennt, dass das Gehäuserohteil 10 zumindest im Wesentlichen rotationssymmetrisch bzw. zylindrisch ausgebildet ist. Im Gehäuserohteil 10 wird eine Montageöffnung 12 erzeugt, die mit einem in Fig. 2 schematisch gezeigten Gehäuseelement 14 korrespondiert. Das Gehäuseelement 14 umfasst hierzu eine Plattform 16, deren Dimensionen (Höhe H, Breite B, Dicke d) denen der Montageöffnung 12 entspricht. Insbesondere entspricht die Dicke d der Plattform 16 der Wandstärke d des Gehäuserohteils 10. Die Montageöffnung 12 weist eine möglichst einfache Geometrie (ggf. mit abgerundeten Kanten) auf, beispielsweise eine kreisförmige oder rechteckige. Die Herstellung der Montageöffnung 12 kann mit Hilfe eines Schneidverfahrens erfolgen, also beispielsweise durch Erodieren, Fräsen oder Laserstrahlschneiden.

Das Gehäuseelement 14 umfasst weiterhin lokale Designmerkmale oder Bauelemente 18, die auf der Plattform 16 ausgebildet sind. Bauelemente 18 können beispielsweise Flansche, lokale Aufdickungen, Ansätze, Durchführungen und/oder Verstrebungen umfassen, um das Gehäuserohteil 10 mit bestimmten Eigenschaften, Anbindungspunkten oder dergleichen zu versehen. Das Gehäuseelement 14 kann damit unabhängig von der Fertigung des Gehäuserohteils 10 beispielsweise durch Zerspanung, ECM oder durch additive Fertigung separat hergestellt werden. Die Plattform 16 kann in Abhängigkeit des Herstellungsverfahrens als Basis zum Aufbau des Bauelements 18 bereitgestellt oder zusammen mit dem Bauelement 18 hergestellt werden. Im Fall einer additiven Fertigung wird bevorzugt Laser- oder Elektronenstrahlschmelzen verwendet, um eine sogenannte Near-Net-Shape-Geometrie, das heißt eine endkonturnahe Geometrie zu realisieren, die keine weitere Bearbeitung benötigt.

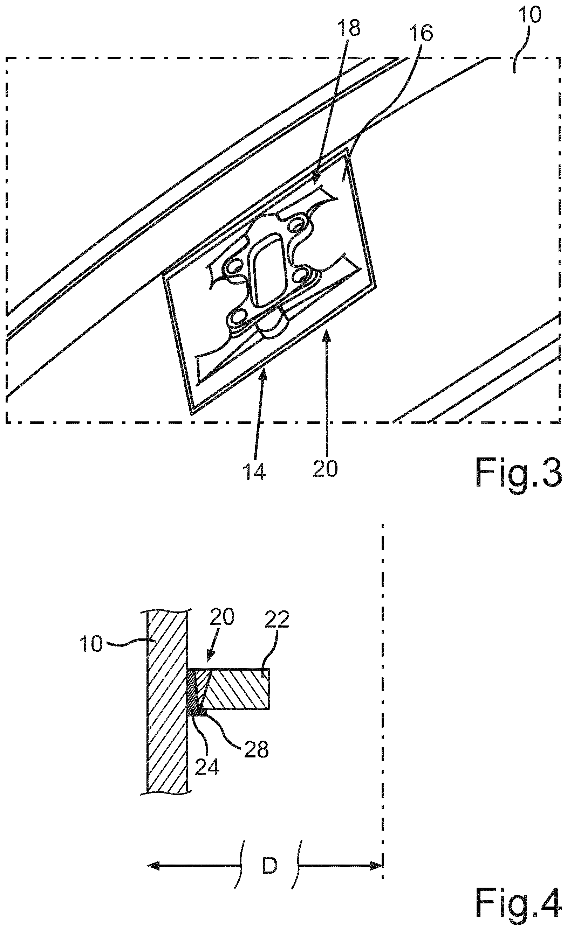

Fig. 3 zeigt eine schematische Perspektivansicht des Gehäuserohteils 10, bei welchem das Gehäuseelement 14 in der Montageöffnung 12 angeordnet und mit dem Gehäuserohteil 10 unter Ausbildung einer umlaufenden Schweißnaht 20 verschweißt ist. Dies erfolgt bevorzugt durch Elektronenstrahl- oder Laserstrahlschweißen. Die Vorteile dieses Herstellungsverfahrens sind neben einer Minimierung der Rohteilkosten insbesondere eine Verkürzung der Fertigungszeit, da die Designmerkmale 18 unabhängig von den Fertigungsfolgen am Gehäuserohteil 10 hergestellt werden können. Zudem erfolgt beim Fügen des Gehäuseelements 14 eine sehr geringere Wärmeeinbringung in das Gehäuserohteil 10, so dass ein Verzug des Gehäuserohteils 10 vorteilhaft vermieden wird. Es kann weiterhin vorgesehen sein, dass das Gehäuseelement 14 und das Gehäuserohteil 10 miteinander korrespondierende Zentrierelemente (z. B. eine Zentrierlippe) aufweisen, um eine korrekte relative räumliche Anordnung zueinander sicherzustellen ("failproof design"). Ebenso kann vorgesehen sein, dass das Gehäuseelement 14 in die Montageöffnung 12 eingeschrumpft wird. Hierzu wird das Gehäuserohteil 10 zunächst um eine bestimmte Temperatur $\Delta T$ erwärmt, bevor das Gehäuseelement 14 in der Montageöffnung 12 angeordnet wird. Beim Abkühlen erfolgt eine kraftschlüssige Verbindung zwischen dem Gehäuserohteil 10 und dem Gehäuseelement 14.

Fig. 4 zeigt eine schematische seitliche Schnittansicht eines Bereichs des Gehäuserohteils 10, in welchem eine ringförmige Rail 22, das heißt ein interner Flansch, unter Ausbildung einer als I-Naht ausgeführten Schweißnaht 20 mit dem Gehäuserohteil 10 umlaufend verschweißt ist. Zum Verschweißen der Rail 22 oder eines Flansches 26 ist es generell zwar möglich, aber in der Regel nicht erforderlich, Schweißzusätze zu verwenden. Die Rail 22 wird vor dem Verschweißen mittels eines mit einer Zentrierlippe 28 versehenen Anschlags 24 gegenüber dem Gehäuserohteil 10 ausgerichtet. Der Anschlag 24 kann beispielsweise umlaufend frästechnisch hergestellt werden, wobei dies gegebenenfalls ein geringes Aufmaß der Gehäusekontur erfordert. Ebenso ist es möglich, den Anschlag 24 fügetechnisch mit dem Gehäuserohteil 10 zu verbinden. Als Fügeverfahren sind Punktschweißen, Kleben, etc. denkbar.

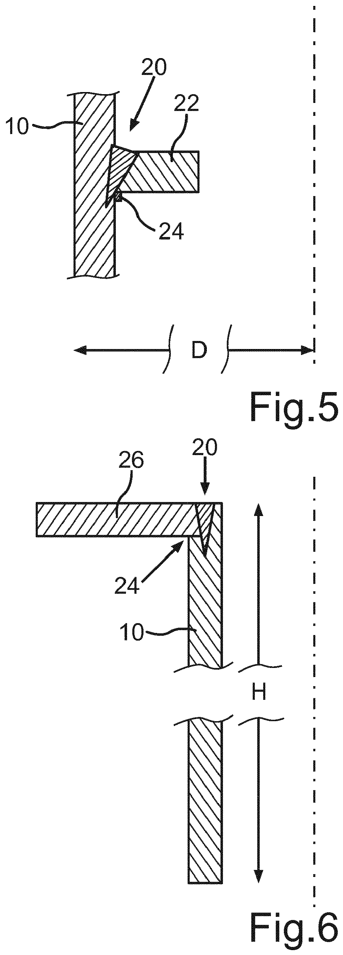

Fig. 5 zeigt eine schematische seitliche Schnittansicht eines Bereichs des Gehäuserohteils 10, in welches eine ringförmige Rail 22 unter Ausbildung einer Kehlnaht 20 mit dem Gehäuserohteil 10 umlaufend verschweißt ist. Die Rail 22 wird vor dem Verschweißen erneut mittels eines Anschlags 24 gegenüber dem Gehäuserohteil 10 ausgerichtet. Der Anschlag 24 kann ebenfalls umlaufend frästechnisch hergestellt werden, wobei dies gegebenenfalls ein geringes Aufmaß der Gehäusekontur von wenigen Zehntel-Millimeter erfordert. Ebenso ist es natürlich auch in diesem Fall möglich, lokale Absatzelemente fügetechnisch mit dem Gehäuserohteil 10 zu verbinden. Als Fügeverfahren sind Punktschweißen, Kleben, etc. denkbar. Zusätzlich kann es vorgesehen sein, die Rail 22 vor dem Verschweißen in das Gehäuserohteil 10 einzuschrumpfen. Hierzu wird das Gehäuserohteil 10 zunächst in einem Ofen um eine Temperatur $\Delta T$ gemäß der Formel (I)

$$\Delta T = \Delta D / (\alpha * D) \ (I)$$

erwärmt, in welcher

$\Delta T$: Temperaturerhöhung
$\alpha$: Wärmeausdehnungskoeffizient
D: Durchmesser des Gehäuserohteils 10
$\Delta D$: Differenz der Durchmesser von Gehäuserohteil 10 und Rail 22

bedeuten. Wenn das Gehäuserohteil 10 und die Rail 22 beispielsweise aus dem Werkstoff IN718 mit $\alpha \approx 1,2*10^{-5}K^{-1}$ bestehen, ist für D = 1 m und $\Delta D$ = 5/10 mm eine Temperaturerhöhung $\Delta T \approx 40$ K erforderlich. Generell ist es bevorzugt, wenn die Rail 22 aus einem hochwarmfesten Werkstoff besteht, da während des Betriebs der fertigen Strömungsmaschine hohe Temperaturen in diesem Bereich auftreten. Die Verwendung eines hochwarmfesten Werkstoffs verhindert damit insbesondere das Auftreten von Rissen und sonstigen Verschleißerscheinungen (Fretting). Es kann weiterhin vorgesehen sein, die Rail 22 und das Gehäuserohteil 10 miteinander korrespondierende Zentrierelemente (z. B. eine Zentrierlippe 28) aufweisen, um eine korrekte relative räumliche Anordnung zueinander sicherzustellen ("failproof design"). Mehrere Rails 22 können dadurch hergestellt werden, dass die oben beschriebene Vorgehensweise in eine Richtung (d. h. von "unten nach oben" bzw. von "oben nach unten") wiederholt angewendet wird.

Fig. 6 zeigt eine schematische seitliche Schnittansicht eines Bereichs des Gehäuserohteils 10, an welchem ein Flansch 26 mit dem Gehäuserohteil 10 verschweißt ist. Hierzu wird zunächst ein Anschlag 24 am oberen Rand des Gehäuserohteils 10 durch Fräsen einer umlaufenden Nut hergestellt. Anschließend wird der ringförmige Flansch 26 am Gehäuserohteil 10 positioniert und mit diesem verschweißt. Im vorliegenden Ausführungsbeispiel erfolgt dies mittels einer als I-Stoß ausgebildeten, ebenfalls umlaufenden Schweißnaht 20. Es kann grundsätzlich vorgesehen sein, dass der Flansch 26 und das Gehäuserohteil 10 miteinander korrespondierende Zentrierelemente (z. B. "Zentrierlippe") aufweisen, um eine korrekte relative räumliche Anordnung zueinander sicherzustellen ("failproof design"). Zusätzlich kann vorgesehen sein, dass der Flansch 26 vor dem Anordnen am Gehäuserohteil 10 erwärmt und auf das Gehäuserohteil 10 aufgeschrumpft wird. Zur Bestimmung der dazu erforderlichen Temperaturerhöhung $\Delta T$ kann die obige Formel (I) herangezogen werden.

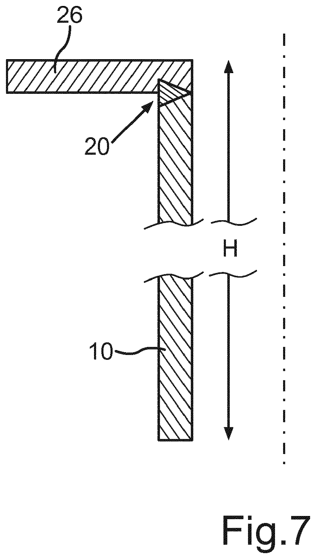

Fig. 7 zeigt eine schematische seitliche Schnittansicht eines Bereichs des Gehäuserohteils 10, an welchem ein alternativer Flansch 26 angeordnet und mit dem Gehäuserohteil 10 verschweißt ist. Im Unterschied zum vorherigen Ausführungsbeispiel umfasst das Gehäuserohteil 10 keinen Anschlag 24. Der ringförmige Flansch 26 wird daher lediglich auf dem Gehäuserohteil 10 angeordnet und mittels einer Kehlnaht 20 mit diesem verschweißt. Gegebenenfalls kann vorgesehen sein, dass der Flansch 26 und das Gehäuserohteil 10 miteinander korrespondierende Zentrierelemente (z. B. "Zentrierlippe") aufweisen, um eine korrekte relative räumliche Anordnung zueinander sicherzustellen ("failproof design").

Bezugszeichenliste:

10    Gehäuserohteil
12    Montageöffnung
14    Gehäuseelement
16    Plattform
18    Bauelement
20    Schweißnaht
22    Rail
24    Anschlag
26    Flansch
28    Zentrierlippe

**Patentansprüche**

1. Verfahren zum Herstellen eines Gehäuses einer Strömungsmaschine, insbesondere einer Gasturbine, umfassend die Schritte:

   - Bereitstellen eines Gehäuserohteils (10);
   - Herstellen eines Gehäuseelements (14);
   - Erzeugen einer mit dem Gehäuseelement (14) korrespondierenden Montageöffnung (12) im Gehäuserohteil (10);
   - Anordnen des Gehäuseelements (14) in der Montageöffnung (12); und
   - Fügen des Gehäuseelements (14) mit dem Gehäuserohteil (10) mittels eines Schweißverfahrens.

2. Verfahren nach Anspruch 1,
   **dadurch gekennzeichnet, dass**
   ein Gehäuserohteil (10) mit einer zumindest im Wesentlichen rotationssymmetrischen, insbesondere zylindrischen oder konischen Geometrie bereitgestellt wird.

3. Verfahren nach Anspruch 1 oder 2,
   **dadurch gekennzeichnet, dass**
   das Gehäuseelement (14) mittels wenigstens eines Verfahrens aus der Gruppe Zerspanen, elektrochemisches Abtragen (ECM) und additive Fertigungsverfahren, insbesondere Laserstrahlschmelzen und/oder Elektronenstrahlschmelzen, hergestellt wird.

4. Verfahren nach einem der Ansprüche 1 bis 3,
   **dadurch gekennzeichnet, dass**
   das Gehäuseelement (14) auf und/oder mit einer in der Montageöffnung (12) anzuordnenden Plattform (16) hergestellt wird, wobei die Plattform (16) vorzugsweise eine mit einer Wandstärke (d) des Gehäuserohteils (10) korrespondierende Wandstärke (d) besitzt.

5. Verfahren nach einem der Ansprüche 1 bis 4,
   **dadurch gekennzeichnet, dass**
   eine Montageöffnung (12) mit einer zumindest im Wesentlichen kreisförmigen oder ovalen oder mehreckigen, insbesondere rechteckigen Geometrie im Gehäuserohteil (10) erzeugt wird.

6. Verfahren nach einem der Ansprüche 1 bis 4,
   **dadurch gekennzeichnet, dass**
   das Gehäuseelement (14) beim Anordnen mittels wenigstens eines Zentrierelements relativ zur Montageöffnung (12) ausgerichtet wird.

7. Verfahren nach einem der Ansprüche 1 bis 6,
   **dadurch gekennzeichnet, dass**
   die Montageöffnung (12) mittels wenigstens eines Trennverfahrens, insbesondere aus der Gruppe Erodieren, Fräsen und Laserstrahlschneiden, erzeugt wird.

8. Verfahren nach einem der Ansprüche 1 bis 7,
   **dadurch gekennzeichnet, dass**
   das Gehäuserohteil (10) vor dem Anordnen des Gehäuseelements (14) in der Montageöffnung (12) erwärmt und das Gehäuseelement (14) anschließend in die Montageöffnung (12) eingeschrumpft wird.

9. Verfahren nach einem der Ansprüche 1 bis 8,
   **dadurch gekennzeichnet, dass**
   das Gehäuseelement (14) mittels wenigstens eines Schweißverfahrens aus der Gruppe Elektronenstrahlschweißen und Laserstrahlschweißen am Gehäuserohteil (10) festgelegt wird.

10. Verfahren nach einem der Ansprüche 1 bis 9,
    **dadurch gekennzeichnet, dass**
    das Gehäuseelement (14) mit wenigstens einem Bauelement aus der Gruppe Flansch, lokale Aufdickung, Ansatz, Durchführung und/oder Verstrebung hergestellt wird.

11. Verfahren nach einem der Ansprüche 1 bis 10,
    **dadurch gekennzeichnet, dass**
    das Gehäuserohteil (10) thermisch gedehnt wird, wonach wenigstens eine Rail (22) im Gehäuserohteil (10) angeordnet und eingeschrumpft wird und/oder dass ein Flansch (26) thermisch gedehnt wird, wonach der Flansch (26) am Gehäuserohteil (10) angeordnet und auf das Gehäuserohteil (10) aufgeschrumpft wird.

12. Verfahren nach Anspruch 11,
    **dadurch gekennzeichnet, dass**
    am Gehäuserohteil (10) wenigstens ein Anschlag (24) hergestellt wird, mittels welchem die Rail (22) und/oder der Flansch (26) relativ zum Gehäuserohteil (10) ausgerichtet wird.

13. Verfahren nach Anspruch 12,
    **dadurch gekennzeichnet, dass**
    der Anschlag (24) mittels eines Trennverfahrens, insbesondere durch Fräsen, hergestellt und/oder durch ein Fügeverfahren, insbesondere durch Schweißen und/oder Kleben, mit dem Gehäuserohteil (10) verbunden wird.

14. Verfahren nach einem der Ansprüche 11 bis 13,
    **dadurch gekennzeichnet, dass**
    die Rail (22) und/oder der Flansch (26) mit dem Gehäuserohteil (10) verschweißt wird, insbesondere mittels einer umlaufenden Schweißnaht (20) und/oder einer Kehlnaht und/oder eines I-Stoßes und/oder einer I-Naht.

**15.** Gehäuse einer Strömungsmaschine, insbesondere einer Gasturbine,
**dadurch gekennzeichnet, dass**
dieses ein Gehäuserohteil (10) umfasst, an welchem ein Gehäuseelement (14) in einer korrespondierenden Montageöffnung (12) im Gehäuserohteil (10) festgelegt und mit dem Gehäuserohteil (10) verschweißt ist.

Fig.1

Fig.2

Fig.3

Fig.4

20

10

22

24

D

Fig.5

26

20

24

10

H

Fig.6

Fig.7

Europäisches
Patentamt

European
Patent Office

Office européen
des brevets

**EUROPÄISCHER RECHERCHENBERICHT**

Nummer der Anmeldung

EP 17 15 2088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 653 054 A1 (GEN ELECTRIC [US]) 3. Mai 2006 (2006-05-03) | 1-3,5-7, 9,10,15 | INV. F01D25/24 |
| Y | * Spalte 3, Absatz 13 - Spalte 4, Absatz 20; Abbildungen 2,3 * | 8,11-14 | B22F5/00 B22F7/06 B22F7/08 |
| | ----- | | B33Y10/00 |
| X | US 2013/224012 A1 (DUROCHER ERIC [CA] ET AL) 29. August 2013 (2013-08-29) * Seite 1, Absatz 2 - Seite 2, Absatz 27; Abbildungen 2,3 * | 1-3,5,7, 9,10,15 | B33Y80/00 B22F3/105 |
| | ----- | | |
| X | US 2015/040393 A1 (SHTEYMAN YEVGENIY [US] ET AL) 12. Februar 2015 (2015-02-12) * Seite 2, Absatz 17 - Seite 2, Absatz 19; Abbildungen 3,4 * | 1-3,5,7, 9,10,15 | |
| | ----- | | |
| X | DE 14 28 223 A1 (ROLLS ROYCE) 10. Juli 1969 (1969-07-10) * Seite 5, Absatz 3 - Seite 7, Absatz 2; Abbildungen 3,6 * | 1-5,7,9, 10,15 | |
| | ----- | | RECHERCHIERTE SACHGEBIETE (IPC) |
| X | US 2006/010852 A1 (GEKHT EUGENE [CA] ET AL) 19. Januar 2006 (2006-01-19) * Seite 2, Absatz 26 - Seite 3, Absatz 33; Abbildungen 3-6,8 * | 1-3,5,7, 9,10,15 | F01D B22F |
| | ----- | | |
| X | GB 1 013 342 A (TETMARK PATENTS LTD) 15. Dezember 1965 (1965-12-15) * Seite 2, Zeile 83 - Seite 2, Zeile 119; Abbildung 2 * | 1-3,5,7, 9,10,15 | |
| | ----- | | |
| Y | EP 1 607 158 A1 (SNECMA [FR]) 21. Dezember 2005 (2005-12-21) * Spalte 4, Zeile 36 - Spalte 4, Zeile 51 * | 8 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 31. August 2017 | Rau, Guido |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

**Europäisches Patentamt**

**European Patent Office**

**Office européen des brevets**

**EUROPÄISCHER RECHERCHENBERICHT**

Nummer der Anmeldung

EP 17 15 2088

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2012/170188 A2 (BORGWARNER INC [US]; LINGENAUBER ROBERT [DE]; SCHERRER FRANK [DE]; HEM) 13. Dezember 2012 (2012-12-13) * Seite 1, Zeile 34 - Seite 2, Zeile 10; Abbildung 3 * ----- | 11-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 31. August 2017 | Rau, Guido |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 15 2088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2017

| Im Recherchenbericht angeführtes Patentdokument | | Datum der Veröffentlichung | Mitglied(er) der Patentfamilie | | Datum der Veröffentlichung |
|---|---|---|---|---|---|
| EP 1653054 | A1 | 03-05-2006 | EP | 1653054 A1 | 03-05-2006 |
| | | | JP | 4771782 B2 | 14-09-2011 |
| | | | JP | 2006125399 A | 18-05-2006 |
| | | | US | 2006096091 A1 | 11-05-2006 |
| | | | US | 2013064653 A1 | 14-03-2013 |
| US 2013224012 | A1 | 29-08-2013 | CA | 2806365 A1 | 27-08-2013 |
| | | | US | 2013224012 A1 | 29-08-2013 |
| US 2015040393 | A1 | 12-02-2015 | US | 2015040393 A1 | 12-02-2015 |
| | | | WO | 2015020767 A1 | 12-02-2015 |
| DE 1428223 | A1 | 10-07-1969 | DE | 1428223 A1 | 10-07-1969 |
| | | | GB | 960812 A | 17-06-1964 |
| US 2006010852 | A1 | 19-01-2006 | CA | 2573342 A1 | 26-01-2006 |
| | | | CA | 2796895 A1 | 26-01-2006 |
| | | | EP | 1781900 A1 | 09-05-2007 |
| | | | JP | 2008506876 A | 06-03-2008 |
| | | | US | 2006010852 A1 | 19-01-2006 |
| | | | US | 2006260127 A1 | 23-11-2006 |
| | | | WO | 2006007686 A1 | 26-01-2006 |
| GB 1013342 | A | 15-12-1965 | KEINE | | |
| EP 1607158 | A1 | 21-12-2005 | CA | 2509486 A1 | 15-12-2005 |
| | | | EP | 1607158 A1 | 21-12-2005 |
| | | | FR | 2871398 A1 | 16-12-2005 |
| | | | RU | 2377422 C2 | 27-12-2009 |
| | | | US | 2006026833 A1 | 09-02-2006 |
| WO 2012170188 | A2 | 13-12-2012 | CN | 103534459 A | 22-01-2014 |
| | | | DE | 112012001818 T5 | 06-02-2014 |
| | | | JP | 6116551 B2 | 19-04-2017 |
| | | | JP | 2014516139 A | 07-07-2014 |
| | | | KR | 20140038471 A | 28-03-2014 |
| | | | US | 2014099196 A1 | 10-04-2014 |
| | | | WO | 2012170188 A2 | 13-12-2012 |

EPO FORM P0461

Für nähere Einzelheiten zu diesem Anhang : siehe Amtsblatt des Europäischen Patentamts, Nr.12/82